# FASCICULE DE BREVET EUROPEEN

(11) **EP 0 728 088 B1**
(45) Date de publication et mention de la délivrance du brevet: **13.01.1999**
(21) Numéro de dépôt: 94931059.3
(22) Date de dépôt: 13.10.1994
(51) Int. Cl.: B60T 13/52

(54) **SERVOMOTEUR PNEUMATIQUE A FONCTIONNEMENT SILENCIEUX**
PNEUMATISCHER SERVOMOTOR MIT GERÄUSCHLOSEM BETRIEB
SILENT PNEUMATIC BRAKE SERVO

(30) Priorité: 16.11.1993 FR 9313614
(43) Date de publication de la demande: 28.08.1996
(73) Titulaire: Bosch Systemes de Freinage, 93700 Drancy (FR)
(72) Inventeur: GAUTIER, Jean, Pierre, F-93600 Aulnay-sous-Bois (FR); VERBO, Ulysse, F-93600 Aulnay-sous-Bois (FR); PEREZ REVILLA, Miguel, F-95100 Argenteuil (FR); TRIPIER, Bernard, F-78400 Chatou (FR)
(74) Mandataire: Bentz, Jean-Paul
(86) Numéro de dépôt international: FR9401186
(87) Numéro de publication internationale: WO9513947

(56) Documents cités:
- EP-A- 0 405 603
- GB-A- 2 051 270
- US-A- 5 249 505

## Description

La présente invention concerne les servomoteurs pneumatiques, du type de ceux qui sont utilisés pour fournir une assistance au freinage des véhicules automobiles.

De tels servomoteurs comportent de façon classique une enveloppe possédant un axe de symétrie, séparée de façon étanche par une structure de paroi mobile en une chambre avant reliée en permanence à une source de dépression et une chambre arrière reliée sélectivement à la chambre avant ou à l'atmosphère extérieure par une valve à trois voies actionnée par une tige de commande axiale soumise à l'action d'un ressort de rappel disposé dans un espace annulaire entre la tige de commande et une partie tubulaire arrière de la structure de paroi mobile faisant saillie à l'extérieur de l'enveloppe, la valve à trois voies étant disposée dans cette partie tubulaire arrière.

Ces servomoteurs sont habituellement disposés dans le compartiment moteur du véhicule, sur le tablier de celui-ci, de sorte que la tige de commande du servomoteur fasse saillie dans l'habitacle pour pouvoir être actionnée par le conducteur. Il s'ensuit que la partie centrale arrière de la paroi mobile, comportant la valve à trois voies, fait également saillie à l'intérieur de l'habitacle.

Il en résulte que, lorsque le conducteur actionne la pédale de frein reliée à la tige de commande du servomoteur, ce dernier aspire de l'air à la pression atmosphérique dans l'habitacle du véhicule. L'air mis en mouvement par le fonctionnement du servomoteur génère alors des bruits qui sont intégralement transmis dans l'habitacle du véhicule.

On a tenté d'apporter diverses solutions à ce problème. Par exemple, le document FR-A-2 551 009 prévoit des moyens de guidage de l'air aux alentours immédiats de la valve à trois voies, en amont et en aval de celle-ci.

Le document FR-A-2 516 880 prévoit un dispositif de silencieux en mousse réticulée, disposé à l'intérieur de la partie centrale arrière de la structure de paroi mobile, ce dispositif comportant une surface externe s'appliquant contre la surface interne de cette partie centrale arrière, et dont l'intérieur est formé avec des ouvertures de passage ininterrompu, orientées suivant la direction de la tige de commande, pour procurer un passage d'écoulement de l'air au travers du dispositif.

Le document DE-A-3 924 672 prévoit quant à lui un servomoteur dont la prise d'air à la pression atmosphérique est située dans le compartiment moteur du véhicule.

Toutefois, ces solutions antérieures présentent encore des dispositifs imparfaits, ou économiquement inapplicables car trop complexes. De plus, dans le but de réduire le bruit de fonctionnement, ces systèmes introduisent sur le parcours de l'air des obstacles à son mouvement qui augmentent le temps de réponse du servomoteur au début de sa phase d'actionnement.

D'autre part, les études menées par le demandeur ont montré que le bruit généré par le fonctionnement d'un servomoteur a deux sources principales. La première réside dans la valve à trois voies elle-même qui n'offre à l'air qu'un passage de faible section. La seconde réside dans le ressort de rappel de la tige de commande, qui présente un obstacle au passage de l'air.

Les documents antérieurs ont essayé de minimiser la première source de bruit avec les inconvénients mentionnés plus haut, et ont ignoré la seconde source de bruit, ou n'ont pas su ou pas pu résoudre le problème posé par cette seconde source de bruit.

Le document US-A-5 249 505 divulgue un servomoteur pneumatique conforme au préambule de la revendication principale, comportant un élément de maintien de la valve à trois voies à l'intérieur d'un alésage et de positionnement du ressort de rappel de la tige de commande axiale à l'intérieur de cet alésage pour diriger de l'air sensiblement exempt de turbulences à travers des fentes de l'élément de maintien vers la valve à trois voies pour son admission dans la chambre arrière du servomoteur lorsqu'une force d'entrée éloigne le plongeur de la valve de commande de la valve à trois voies.

La présente invention a donc pour but de proposer un servomoteur dont le fonctionnement soit totalement silencieux, en mettant en oeuvre des moyens simples, fiables et peu onéreux, et qui n'influencent pas le temps de réponse du servomoteur.

Dans ce but, l'invention propose un servomoteur du type rappelé plus haut, dans lequel un manchon disposé dans la partie tubulaire arrière est prévu pour séparer l'espace annulaire en un logement pour le ressort de rappel où l'air est statique et un volume annulaire pour la circulation de l'air en mouvement en amont de la valve à trois voies.

D'autres buts, caractéristiques et avantages de la présente invention ressortiront plus clairement de la description qui suit d'un exemple de réalisation donné à titre illustratif, en référence aux dessins annexés sur lesquels:
- La Figure 1 est une vue de côté, en coupe longitudinale, représentant la partie centrale arrière d'un servomoteur pneumatique d'assistance au freinage réalisé conformément à la présente invention,
- la Figure 2 est une vue semblable à celle de la Figure 1, d'une première variante de réalisation, et
- la Figure 3 est une vue semblable à celle de la Figure 1, d'une seconde variante de réalisation.

Les Figures représentent la partie centrale arrière d'un servomoteur pneumatique d'assistance au freinage prévu pour être placé de façon habituelle entre la pédale de frein d'un véhicule et le maître-cylindre commandant le circuit de freinage hydraulique de ce véhicule. Par convention, on appelle "avant" du servomoteur la partie de ce dernier tournée vers le maître-cylindre et "arrière" du servomoteur la partie tournée vers la pédale de frein. Sur les Figures, l'avant est ainsi à gauche et l'arrière à droite.

Le servomoteur représenté comprend un enveloppe extérieure 10 en forme de coquille, présentant une symétrie de révolution autour d'un axe X-X'. Seule la partie centrale arrière de cette enveloppe 10 est représentée sur les Figures.

Une structure de paroi mobile 12 délimite à l'intérieur de l'enveloppe 10 une chambre avant 14 et une chambre arrière 16. La paroi mobile 12 est associée à une membrane déroulante souple en élastomère dont le bord périphérique intérieur est reçu de façon étanche grâce a un bourrelet 18 dans un piston creux d'assistance 20 disposé selon l'axe X-X' du servomoteur, et dont le bord périphérique extérieur (non représenté) est fixé de façon étanche sur l'enveloppe extérieure 10.

Le piston creux 20 se prolonge vers l'arrière sous la forme d'une partie tubulaire 22 qui traverse de façon étanche la paroi arrière de l'enveloppe 10. Un ressort de compression 24 interposé entre le piston 20 et la paroi avant (non représentée) de l'enveloppe 10 maintient normalement le piston 20 dans la position arrière de repos illustrée sur les Figures, dans laquelle la chambre arrière 16 présente son volume minimal et la chambre avant 14 son volume maximal.

Dans la partie centrale de la paroi mobile située en avant de la partie tubulaire arrière 22, le piston 20 présente un alésage 26 dans lequel est reçu en coulissement un plongeur 28 présentant également une symétrie de révolution autour de l'axe X-X'. L'extrémité avant d'une tige de commande 30 du servomoteur, disposée également selon l'axe X-X', est montée rotulante dans un alésage borgne du plongeur 28.

L'extrémité arrière (non représentée) de la tige de commande 30, qui fait saillie à l'extérieur de la partie tubulaire 22, est commandée directement par la pédale de frein du véhicule (non représentée).

L'espace annulaire 32 délimité entre la tige de commande 30 et la partie tubulaire 22 du piston 20 peut communiquer avec la chambre arrière 16 au travers d'un passage radial 34 formé dans la partie centrale du piston, lorsque des moyens d'assistance commandés par le plongeur 28 sont actionnés.

De façon classique, ces moyens d'assistance comprennent une valve à trois voies comportant un clapet annulaire 36 et deux sièges de valve annulaires formés à l'arrière de la partie centrale du piston 20 et à l'arrière du plongeur 28.

Lorsque la tige de commande 30 est en position arrière de repos, le clapet 36 établit normalement une communication entre les deux chambres 14 et 16 du servomoteur.

Lorsque le conducteur du véhicule actionne la pédale de frein, il en résulte un mouvement vers l'avant de la tige de commande 30, du plongeur 28 et du clapet 36 qui, dans un premier temps, isole l'une de l'autre les chambres 14 et 16, puis, dans un deuxième temps, ouvre la communication entre la chambre arrière 16 et l'espace annulaire 32.

Dans une conception classique de servomoteur, l'espace annulaire 32 communique avec l'atmosphère extérieure de façon axiale, c'est à dire autour de la tige de commande 30. L'air est ainsi aspiré dans la chambre arrière 16 par le passage de valve entre le clapet 36 et le siège de valve formé sur le plongeur 28, et en passant entre les spires du ressort de rappel de la tige de commande 30.

Dans une telle conception, l'interstice constitué par le passage de valve constitue une source de bruits, de même que la section de passage entre les spires du ressort de rappel. Classiquement, un filtre est disposé entre la tige de commande et l'extrémité arrière de la partie tubulaire 22, pour remplir à la fois les fonctions de filtre à air et d'atténuateur de bruits. Dans cette dernière fonction, le filtre offre une résistance importante au passage de l'air, et donc une entrave au fonctionnement du servomoteur, qui dégrade le temps de réponse de ce dernier.

Conformément à la présente invention, cet inconvénient est évité en prévoyant dans l'espace annulaire 32 une séparation entre l'air en mouvement en amont de la valve à trois voies et le ressort de rappel de la tige de commande.

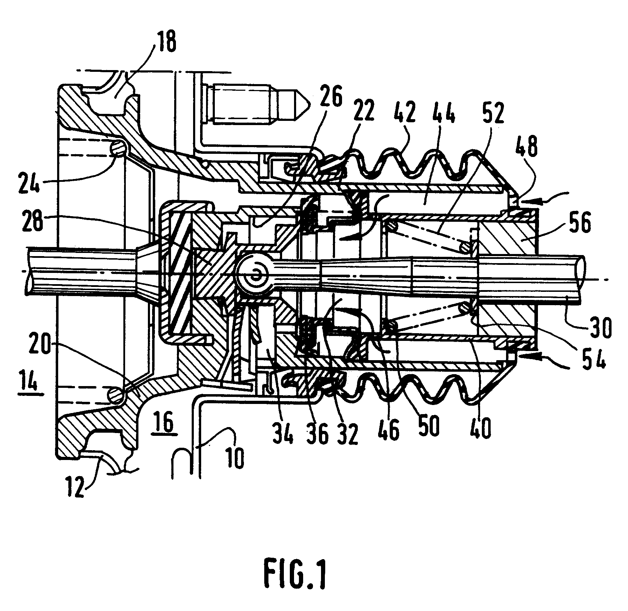

Comme on le voit sur la Figure 1, ces moyens de séparation sont constitués par un manchon cylindrique 40 disposé dans la partie tubulaire arrière 22 et solidaire de cette dernière. Le manchon 40 est par exemple en appui par son extrémité avant sur l'extrémité arrière de la fixation du clapet 36 sur la partie tubulaire arrière 22, et son extrémité arrière est par exemple solidaire d'un soufflet tubulaire souple 42 protégeant le coulissement de la partie tubulaire 22 dans l'enveloppe 10, le soufflet 42 étant d'autre part fixé par son extrémité avant de façon étanche à l'enveloppe 10.

Le manchon 40 a un diamètre extérieur notablement inférieur au diamètre intérieur de la partie tubulaire 22 pour définir entre ces éléments un volume annulaire 44. Des ouvertures 46 sont pratiquées dans l'extrémité avant du manchon 40, pour faire communiquer l'espace 32 et le volume 44. De même, des ouvertures 48 sont pratiquées dans l'extrémité arrière du manchon 40, ou comme on l'a représenté dans l'extrémité arrière du soufflet 42, pour faire communiquer le volume 44 avec l'atmosphère extérieure.

Le manchon 40 est de plus formé sur sa surface intérieure avec un épaulement radial intérieur 50, formé en arrière des ouvertures 46, pour servir d'appui à un ressort de compression 52 également en appui sur un épaulement 54 de la tige de commande 30, et faisant fonction de ressort de rappel de la tige de commande. Un bouchon 56 assure l'étanchéité entre la tige de commande 30 et le manchon 40. Le manchon 40 forme ainsi une séparation de l'espace annulaire 32 en un volume annulaire 44, communiquant à l'arrière avec l'atmosphère extérieure par les ouvertures 48 et à l'avant avec le clapet 36 par les ouvertures 46, et un logement pour le ressort de rappel 52 de la tige de poussée 30, constitué par les épaulements 50 et 54.

On comprend donc que, lors de l'actionnement de la tige de commande 30, l'air à la pression atmosphérique peut parvenir à la chambre arrière 16 du servomoteur en passant par les ouvertures 48, le volume annulaire 44, les ouvertures 46 et l'espace annulaire 32, en suivant les flèches représentées sur la Figure 1. L'air en mouvement contourne ainsi le ressort de rappel 52, ce qui supprime la source de bruit qu'il constituait, l'air situé autour du ressort 52 étant statique grâce au bouchon 56.

De façon particulièrement avantageuse grâce à l'invention, le manchon 40 permet non seulement d'éliminer une des sources de bruit de fonctionnement du servomoteur, constituée par le ressort de rappel de la tige de commande, mais il permet également d'atténuer dans une large mesure l'autre source de bruit, constituée par la valve à trois voies.

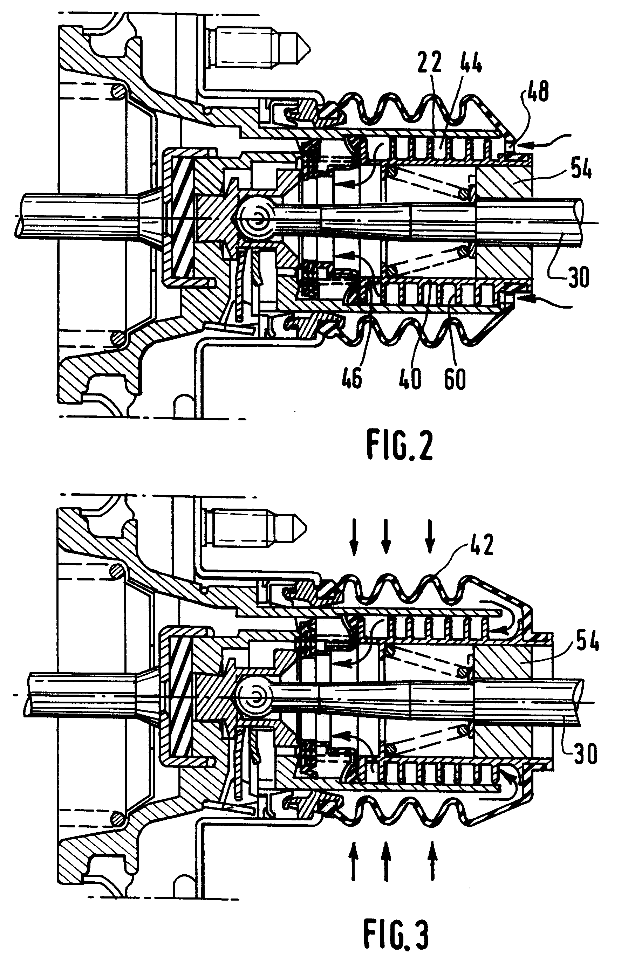

En effet, comme on l'a représenté sur le Figure 2, l'invention rend possible l'installation d'un dispositif de silencieux dans le volume annulaire 44. Comme on peut le voir sur la Figure 2, le manchon 40 est muni sur sa surface extérieure d'ailettes 60 destinées à allonger le parcours de l'air entre les ouvertures 48 et 46. De préférence, les ailettes 60 sont formées d'une seule pièce, par exemple par moulage, avec le manchon 40.

Le diamètre extérieur des ailettes 60 est égal au diamètre intérieur de la partie tubulaire 22 pour former des conduits de guidage de l'air. Les ailettes 60 peuvent être formées sur le manchon 40 de façon à présenter des chicanes sur le passage de l'air dans le volume 44.

Selon une forme préférée de réalisation, une seule ailette 60 est disposée dans le volume annulaire 44, et présente une configuration hélicoïdale, de sorte que l'air emprunte entre les ouvertures 48 et 46 un trajet en hélice circulaire.

De la sorte, le bruit de fonctionnement généré par la valve à trois voies se trouve atténué par la longueur du parcours imposé dans le volume 44 par la ou les ailettes 60, et n'est plus transmis à travers les ouvertures 48 dans l'habitacle du véhicule.

Bien entendu, les ailettes 60 sont disposées de telle façon qu'elles allongent le parcours de l'air sans en entraver le mouvement, pour ne pas réduire le temps de réponse du servomoteur. Dans le cas d'une ailette 60 en hélice circulaire, on pourra choisir son pas pour qu'elle présente le moins de perte de charge possible. On pourra également utiliser deux ou plusieurs ailettes en hélice circulaire de façon à choisir à la fois le pas, c'est à dire la largeur, et l'inclinaison sur l'axe des passages d'air ainsi formés, dans le but d'offrir la résistance minimale à l'air.

En variante, on pourra utiliser un manchon cylindrique tel que celui de la Figure 1, et réaliser une ou plusieurs ailettes sur la surface intérieure de la partie tubulaire 22. De même, on pourra, sur le servomoteur de la Figure 1, insérer entre la partie tubulaire 22 et le manchon 40, une pièce tubulaire comportant des chicanes ou une hélice circulaire à la façon des ailettes 60.

Dans le mode de réalisation des Figures 1 et 2, on pourra ajouter, par exemple au niveau des ouvertures 48, un filtre anti-poussières, qui n'a qu'une influence négligeable sur l'écoulement d'air qui le traverse, et qui donc ne perturbe pas le temps de réponse du servomoteur.

Un avantage important procuré par une ailette hélicoïdale 60 est que celle-ci confère à l'air traversant le volume 44 une composante tangentielle de vitesse autour de l'axe X-X', de sorte que l'air conserve un mouvement hélicoïdal à l'approche du passage de valve entre le clapet 36 et le siège de valve formé sur le plongeur 28. Il s'ensuit que ce passage de valve n'impose pas de changement brusque de direction à l'air en mouvement, de sorte que l'air peut plus facilement franchir ce passage de valve. La chambre arrière du servomoteur peut dès lors se remplir plus vite, et avec moins de bruit.

On a représenté sur la Figure 3 une autre variante de réalisation, dans laquelle les ouvertures 48 ont été supprimées. Selon cette variante, le soufflet 42 est réalisé en un matériau poreux et déformable, comme par exemple un matériau élastomère poreux, ou un matériau fibreux ou tissé quelconque, éventuellement renforcé par des anneaux rigides de façon à éviter que le soufflet ne vienne gêner le coulissement de la partie tubulaire 22 dans l'enveloppe 10.

Le soufflet 42 offre une surface importante soumise à l'atmosphère extérieure, et ne présente ainsi pratiquement aucun obstacle à l'air qui le traverse lors du fonctionnement du servomoteur. Ce soufflet 42 présente également l'avantage de remplir simultanément la fonction de filtre anti-poussières.

Dans les modes de réalisation des Figures 2 et 3, le bouchon 54 sera avantageusement réalisé en un matériau étanche à l'air, mais présentant une certaine élasticité, comme par exemple un matériau poreux à cellules fermées, de façon à permettre un léger débattement angulaire de la tige de commande 30 autour de la liaison rotulante avec le plongeur 28.

Bien entendu, l'invention n'est pas limitée aux modes de réalisation qui ont été décrits, mais elle est susceptible au contraire de recevoir de nombreuses modifications qui apparaîtront à l'homme du métier. C'est ainsi, par exemple, que dans le mode de réalisation de la Figure 1, on pourra disposer dans le volume annulaire 44 un matériau fibreux non tissé, pour absorber le bruit généré par la valve à trois voies, sans entraver de manière trop importante le mouvement de l'air dans ce volume 44. On pourra également, comme on l'a représenté en pointillés sur la moitié supérieure de la Figure 1, munir le manchon 40 d'une extension tubulaire vers l'avant, solidaire du manchon en amont des ouvertures 46, pour guider de façon supplémentaire l'air sortant de ces ouvertures jusqu'au voisinage de la valve à trois voies.

## Revendications

1. Servomoteur pneumatique d'assistance au freinage, comportant une enveloppe (10) possédant un axe de symétrie (X-X'), séparée de façon étanche par une structure de paroi mobile (12) en une chambre avant (14) reliée en permanence à une source de dépression, et une chambre arrière (16) reliée sélectivement à la chambre avant (14) ou à l'atmosphère extérieure par une valve à trois voies (36) actionnée par une tige de commande axiale (30) soumise à l'action d'un ressort de rappel (52) disposé dans un espace annulaire (32) entre la tige de commande (30) et une partie tubulaire arrière (22) de la structure de paroi mobile (12) faisant saillie à l'extérieur de l'enveloppe (10), la valve à trois voies (36) étant disposée dans cette partie tubulaire arrière (22), caractérisé en ce qu'un manchon (40) disposé dans la partie tubulaire arrière (22) est prévu pour séparer l'espace annulaire (32) en un logement pour le ressort de rappel (52) où l'air est statique et un volume annulaire (44) pour la circulation de l'air en mouvement en amont de la valve à trois voies (36).

2. Servomoteur selon la revendication 1, caractérisé en ce que le manchon (40) est formé avec un épaulement radial intérieur (50) constituant avec un épaulement (54) formé sur la tige de commande (30) un logement pour le ressort de rappel (52).

3. Servomoteur selon la revendication 1, caractérisé en ce qu'au moins une ailette (60) est formée dans le volume annulaire (44).

4. Servomoteur selon la revendication 1, caractérisé en ce que plusieurs ailettes (60) sont formées dans le volume annulaire (44) et présentent des chicanes sur le passage de l'air dans ce volume (44).

5. Servomoteur selon la revendication 3, caractérisé en ce que l'ailette (60) présente une configuration hélicoïdale.

6. Servomoteur selon la revendication 5, caractérisé en ce que plusieurs ailettes (60) sont formées dans le volume annulaire (44) et présentent chacune une configuration hélicoïdale.

7. Servomoteur selon la revendication 3, caractérisé en ce que l'ailette (60) est formée sur la surface extérieure du manchon (40).

8. Servomoteur selon la revendication 3, caractérisé en ce que l'ailette (60) est formée sur la surface intérieure de la partie tubulaire arrière (22).

9. Servomoteur selon la revendication 3, caractérisé en ce que l'ailette (60) est formée sur une pièce tubulaire insérée entre le manchon (40) et la partie tubulaire arrière (22).

10. Servomoteur selon la revendication 2, caractérisé en ce que le volume annulaire (44) communique avec l'espace annulaire (32) au moyen d'ouvertures (46) formées dans le manchon (40) en avant de l'épaulement (50) servant d'appui au ressort de rappel (52).

11. Servomoteur selon la revendication 2, caractérisé en ce que le volume annulaire (44) communique avec l'atmosphère extérieure au moyen d'ouvertures (48) pratiquées dans l'extrémité arrière du manchon (40) ou dans un soufflet tubulaire souple (42), dont l'extrémité arrière est fixée sur le manchon (40) et dont l'extrémité avant est fixée sur l'enveloppe (10).

12. Servomoteur selon la revendication 2, caractérisé en ce que le volume annulaire (44) communique avec l'atmosphère extérieure à travers un soufflet tubulaire souple (42), dont l'extrémité arrière est fixée sur le manchon (40) et dont l'extrémité avant est fixée sur l'enveloppe (10), le soufflet tubulaire souple (42) étant réalisé en un matériau poreux et déformable.

## Claims

1. Pneumatic servo for assisting with braking, including a casing (10) having an axis of symmetry (X-X'), divided in leaktight fashion by a movable wall structure (12) into a front chamber (14) permanently connected to a source of partial vacuum, and a rear chamber (16) connected selectively to the front chamber (14) or to the outside atmosphere by a three-way valve (36) actuated by an axial control rod (30) subjected to the action of a return spring (52) located in an annular space (32) between the control rod (30) and a rear tubular part (22) of the movable wall structure (12), projecting out of the casing (10), the three-way valve (36) being located in this rear tubular part (22), characterized in that a sleeve (40), located in the rear tubular part (22) is provided for dividing the annular space (32) into a housing for the return spring (52), where the air is static, and an annular volume (44) for the circulation of moving air upstream of the three-way valve (36).

2. Servo according to Claim 1, characterized in that the sleeve (40) is formed with an internal radial shoulder (50) which, together with a shoulder (54) formed on the control rod (30), constitutes a housing for the return spring (52).

3. Servo according to Claim 1, characterized in that at least one fin (60) is formed in the annular volume (44).

4. Servo according to Claim 1, characterized in that several fins (60) are formed in the annular volume (44) and have baffles against the passage of air in this volume (44).

5. Servo according to Claim 3, characterized in that the fin (60) has a helicoid configuration.

6. Servo according to Claim 5, characterized in that several fins (60) are formed in the annular volume (44) and each has a helicoid configuration.

7. Servo according to Claim 3, characterized in that the fin (60) is formed on the external surface of the sleeve (40).

8. Servo according to Claim 3, characterized in that the fin (60) is formed on the internal surface of the rear tubular part (22).

9. Servo according to Claim 3, characterized in that the fin (60) is formed on a tubular component inserted between the sleeve (40) and the rear tubular part (22).

10. Servo according to Claim 2, characterized in that the annular volume (44) communicates with the annular space (32) by means of openings (46) formed in the sleeve (40) in front of the shoulder (50) acting as a support for the return spring (52).

11. Servo according to Claim 2, characterized in that the annular volume (44) communicates with the external atmosphere by means of openings (48) made in the rear end of the sleeve (40) or in a flexible tubular gaiter (42), the rear end of which is fixed to the sleeve (40), and the front end of which is fixed to the casing (10).

12. Servo according to Claim 2, characterized in that the annular volume (44) communicates with the external atmosphere through a flexible tubular gaiter (42), the rear end of which is fixed to the sleeve (40) and the front end of which is fixed to the casing (10), the flexible tubular gaiter (42) being made from a porous and deformable material.

## Patentansprüche

1. Pneumatischer Bremsunterstützungs-Servomotor mit einem Gehäuse (10), das eine Symmetrieachse (X-X') hat und durch eine bewegliche Wandstruktur (12) in dichter Weise in eine vordere Kammer (14), die permanent an eine Unterdruckquelle angeschlossen ist, und in eine hintere Kammer (16) unterteilt ist, die wahlweise mit der vorderen Kammer (14) oder der Außenatmosphäre über ein Dreiwegeventil (36) verbunden ist, das durch eine axiale Steuerstange (30) betätigt wird, die der Wirkung einer Rückholfeder (52) unterliegt, die in einem ringförmigen Raum (32) zwischen der Steuerstange (30) und einem hinteren röhrenförmigen Abschnitt (22) der beweglichen Wandstruktur (12) angeordnet ist, der aus dem Gehäuse (10) hervorsteht, wobei das Dreiwegeventil (36) in diesem hinteren röhrenförmigen Abschnitt (22) angeordnet ist, dadurch gekennzeichnet, daß eine in dem hinteren röhrenförmigen Abschnitt (22) angeordnete Muffe (40) vorgesehen ist, um den ringförmigen Raum (32) in einen Sitz für die Rückholfeder (52), in dem die Luft stillsteht, und ein ringförmiges Volumen (44) zur Zirkulation der sich bewegenden Luft vor dem Dreiwegeventil (36) zu unterteilen.

2. Servomotor nach Anspruch 1, dadurch gekennzeichnet, daß die Muffe (40) mit einer radialen inneren Schulter (50) ausgebildet ist, die zusammen mit einer auf der Steuerstange (30) ausgebildeten Schulter (54) einen Sitz für die Rückholfeder (52) bildet.

3. Servomotor nach Anspruch 1, dadurch gekennzeichnet, daß mindestens ein Flügel (60) in dem ringförmigen Volumen (44) ausgebildet ist.

4. Servomotor nach Anspruch 1, dadurch gekennzeichnet, daß mehrere Flügel (60) in dem ringförmigen Volumen (44) ausgebildet sind, die für den Luftdurchlauf in diesem Hohlraum (44) Hindernisse darstellen.

5. Servomotor nach Anspruch 3, dadurch gekennzeichnet, daß der Flügel (60) eine schraubenförmige Gestalt hat.

6. Servomotor nach Anspruch 5, dadurch gekennzeichnet, daß mehrere Flügel (60) in dem ringförmigen Volumen (44) ausgebildet sind, von denen jeder eine schraubenförmige Gestalt hat.

7. Servomotor nach Anspruch 3, dadurch gekennzeichnet, daß der Flügel (60) auf der Außenfläche der Muffe (40) ausgebildet ist.

8. Servomotor nach Anspruch 3, dadurch gekennzeichnet, daß der Flügel (60) auf der Innenfläche des hinteren röhrenförmigen Abschnitts (22) ausgebildet ist.

9. Servomotor nach Anspruch 3, dadurch gekennzeichnet, daß der Flügel (60) auf einem zwischen der Muffe (40) und dem hinteren röhrenförmigen Abschnitt (22) eingesetzten röhrenförmigen Teil ausgebildet ist.

10. Servomotor nach Anspruch 2, dadurch gekennzeichnet, daß das ringförmige Volumen (44) mit dem ringförmigen Raum (32) mittels Durchbrüchen (46) verbunden ist, die in der Muffe (49) vor der Schulter (50) ausgebildet sind, die der Rückholfeder (52) als Abstützung dient.

11. Servomotor nach Anspruch 2, dadurch gekennzeichnet, daß das ringförmige Volumen (44) mit der Außenatmosphäre über Durchbrüche (48) verbunden ist, die in dem hinteren Ende der Muffe (40) ausgebildet sind oder in einem nachgiebigen röhrenförmigen Balg (42), dessen hinteres Ende an der Muffe (40) befestigt ist und dessen vorderes Ende am Gehäuse (10) befestigt ist.

12. Servomotor nach Anspruch 2, dadurch gekennzeichnet, daß das ringförmige Volumen (44) mit der Außenatmosphäre über einen nachgiebigen röhrenförmigen Balg (42) verbunden ist, dessen hinteres Ende an der Muffe (40) befestigt ist und dessen vorderes Ende am Gehäuse (10) befestigt ist, wobei der nachgiebige röhrenförmige Balg (42) aus einem porösen und verformbaren Material hergestellt ist.
